# FASCICULE DE BREVET EUROPEEN

(11) **EP 2 079 139 B1**
(45) Date de publication et mention de la délivrance du brevet: **01.08.2018**
(21) Numéro de dépôt: 08291204.9
(22) Date de dépôt: 17.12.2008
(51) Int. Cl.: H02G 3/04, H02G 3/12

(54) **Goulotte électrique dont le socle comporte des moyens de freinage d'appareillages électriques ou d'accessoires rapportés sur le socle, et ensemble électrique comprenant une telle goulotte électrique et un appareillage électrique dédié**
Electric raceway in which the base comprises means for braking electrical switchgears or accessories connected to the base, and electric assembly comprising such an electric raceway and dedicated electrical switchgear
Elektrischer Kabelkanal, dessen Sockel Bremsmittel für elektrische Geräte oder auf dem Sockel befestigte Zubehörteile umfasst, und Elektroeinheit, die einen solchen elektrischen Kabelkanal und das dazugehörige elektrische Gerät umfasst

(30) Priorité: 14.01.2008 FR 0800192
(43) Date de publication de la demande: 15.07.2009
(73) Titulaire: Legrand France, 87000 Limoges (FR)
(72) Inventeur: Gautier, Bruno, 72000 Le Mans (FR); Destruel, Marc, 53600 Châtres la Forêt (FR)
(74) Mandataire: Jacobacci Coralis Harle

(56) Documents cités:
- EP-A- 0 391 713
- EP-A- 0 913 902
- EP-A1- 0 607 083
- WO-A-02/37633
- DE-U1- 8 406 177
- DE-U1- 29 805 506
- FR-A- 2 816 770

## Description

### DOMAINE TECHNIQUE AUQUEL SE RAPPORTE L'INVENTION

La présente invention concerne de manière générale les goulottes électriques destinées au montage direct d'accessoires et d'appareillages électriques ainsi qu'au logement des câbles électriques nécessaires à la desserte de tels appareillages.

Elle concerne plus particulièrement une goulotte électrique comprenant un socle pourvu de deux ailes latérales longitudinales comportant, d'une part, des retours dirigés l'un vers l'autre, qui délimitent une ouverture longitudinale et, d'autre part, des moyens de freinage d'un accessoire ou d'un appareillage électrique accroché au socle.

### ARRIERE-PLAN TECHNOLOGIQUE

On connaît déjà du document DE 200 21 965 une goulotte électrique du type précité dans laquelle les moyens de freinage comportent des stries placées sur les faces avant et arrière opposées des retours du socle et adaptées à coopérer avec des stries complémentaires situées sur les surfaces intérieures de pinces d'agrafes.

L'inconvénient majeur d'une telle goulotte est que, pour assurer le freinage des agrafes sur les retours, les stries prévues sur les agrafes doivent présenter des caractéristiques de profondeur et de largeur spécifiquement adaptées à la coopération avec les stries placées sur les retours du socle de la goulotte. La mise en oeuvre de ces moyens de freinage est donc relativement complexe.

On connaît également du document EP 1 835 589 une goulotte électrique du type précité dans laquelle lesdits moyens de freinage comprennent, d'une part, des volets flexibles rattachés aux extrémités libres des retours du socle et agissant en tant que moyen de friction coopérant avec des moyens de montage d'un accessoire rapporté sur le socle, et d'autre part, un élément de couvercle en matière souple striée, rattaché au socle et recouvrant une partie externe de ce dernier sur laquelle vient s'appuyer l'accessoire rapporté sur le socle.

Outre le fait que le socle d'une telle goulotte est complexe à réaliser, il est spécifiquement agencé pour le montage d'un accessoire recouvrant extérieurement le socle et il ne permet pas le montage direct d'appareillages électriques dans l'ouverture longitudinale dudit socle.

Enfin, le document WO 02/37633 décrit une goulotte électrique comprenant un socle pourvu de deux ailes latérales longitudinales comportant des retours dirigés l'un vers l'autre, qui délimitent une ouverture longitudinale destinée à recevoir un accessoire ou un appareillage électrique à accrocher au socle. Selon ce document, l'appareillage électrique est muni de moyens d'accrochage sur le socle de la goulotte, comportant une dent qui vient se plaquer contre l'entretoise de la partie intérieure rigide de la goulotte et un crochet de maintien dont l'extrémité recourbée s'engage entre l'aile longitudinale de la bande de clipsage et la paroi longitudinale rentrante du socle de la goulotte. Cette extrémité du crochet de maintien de l'appareillage électrique comporte un élément de friction qui prend appui contre la face intérieure de l'aile longitudinale de la bande de clipsage pour limiter les mouvements de l'appareillage une fois monté dans la goulotte. Cet élément de friction est réalisé en un matériau rigide râpeux qui peut notamment comporter une surface similaire à du papier de verre ou du papier-émeri.

Les documents FR2816770, DE8406177 et DE29805506, décrivent des socles de goulotte pourvus d'encoches adaptées à recevoir des éléments de retenue prévus sur les appareillages électriques afin de les immobiliser. Le document EP0913902 décrit un appareillage électrique équipé d'un clip d'immobilisation pourvus d'arêtes tranchantes destinées à s'ancrer sur une partie intérieure rigide d'un socle de goulotte. Enfin le document EP0391713 décrit une boîte d'appareillage électrique encliquetée sur un socle de goulotte et immobilisée sur celui-ci à l'aide d'un cadre d'immobilisation clippé sur ledit socle.

### OBJET DE L'INVENTION

Par rapport à l'état de la technique précité, la présente invention propose une goulotte électrique simple à réaliser, dont le socle autorise le montage direct d'appareillages électriques dans son ouverture longitudinale et qui fournisse des moyens de freinage efficaces de chaque appareillage électrique selon la direction longitudinale du socle.

Plus particulièrement, selon l'invention, on propose une goulotte électrique telle que définie dans la revendication 1.

D'autres caractéristiques avantageuses et non limitatives de la goulotte selon l'invention sont énoncées dans les revendications 2 à 18.

L'invention concerne également un ensemble électrique qui comprend une goulotte électrique telle que précitée et un appareillage électrique comportant des moyens de freinage adaptés à coopérer avec un tampon du socle de la goulotte électrique.

D'autres caractéristiques avantageuses de l'ensemble électrique conforme à l'invention sont énoncées dans les revendications 20 à 26.

### DESCRIPTION DETAILLEE D'UN EXEMPLE DE REALISATION

La description qui va suivre en regard des dessins annexés, donnée à titre d'exemple non limitatif, fera bien comprendre en quoi consiste l'invention et comment elle peut être réalisée.

Sur les dessins annexés :
- la figure 1 est une vue schématique en perspective d'un socle d'une goulotte électrique selon l'invention dans lequel est montée directement une prise de courant ;
- la figure 2 est une vue en loupe du détail B de la figure 1 ;
- la figure 3 est une vue identique à celle de la figure 2 d'une variante de réalisation du socle de la figure 1 ;
- la figure 4 est une vue schématique en perspective de la goulotte électrique de la figure 1 ;
- les figures 5 à 18 sont des vues identiques à celle de la figure 2 de différentes variantes du socle de la figure 1 ;
- la figure 19 est une vue partielle en perspective arrière de la prise de courant de la figure 1 ;
- la figure 20 est une vue en coupe selon le plan A-A de la figure 1 ;
- la figure 21 est une vue en loupe du détail A de la figure 20 ;
- la figure 22 est une vue partielle en perspective arrière d'un premier mode de réalisation d'une prise de courant appartenant à l'ensemble électrique selon l'invention;
- la figure 23 est une vue partielle en perspective arrière d'un deuxième mode de réalisation d'une prise de courant appartenant à l'ensemble électrique selon l'invention;
- la figure 24 est une vue partielle en perspective arrière d'un troisième mode de réalisation d'une prise de courant appartenant à l'ensemble électrique selon l'invention;
- la figure 25 est une vue partielle en perspective arrière d'un quatrième mode de réalisation d'une prise de courant appartenant à l'ensemble électrique selon l'invention ; et
- la figure 26 est une vue partielle en loupe de la prise de courant de la figure 25 montée dans le socle de la figure 1.

En préliminaire, on notera que les parties similaires ou identiques des différents modes de réalisation de l'invention, représentés sur les différentes figures, seront, dans la mesure du possible, référencées par les mêmes signes de référence et ne seront pas systématiquement décrites à chaque fois.

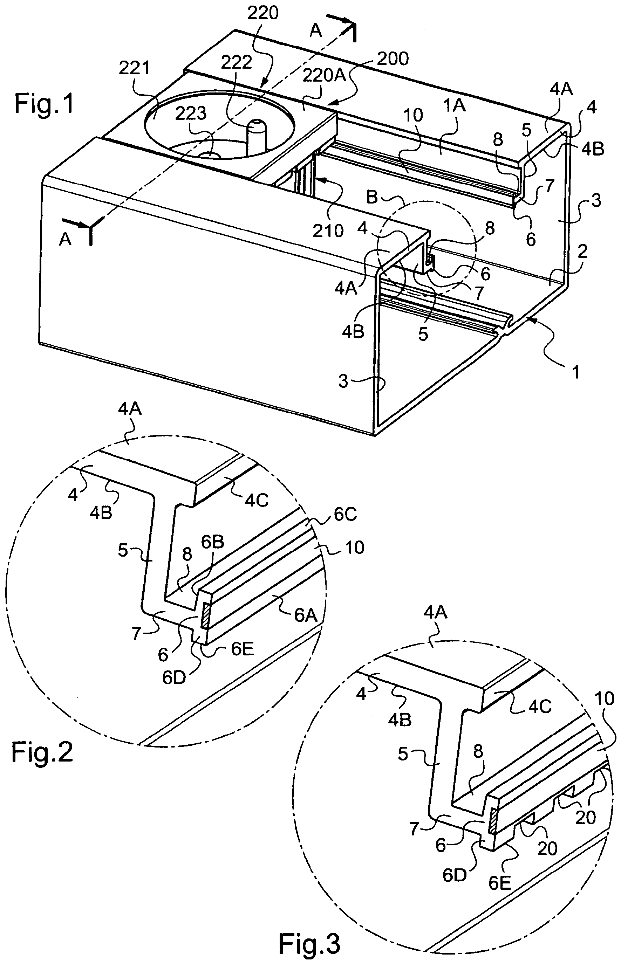

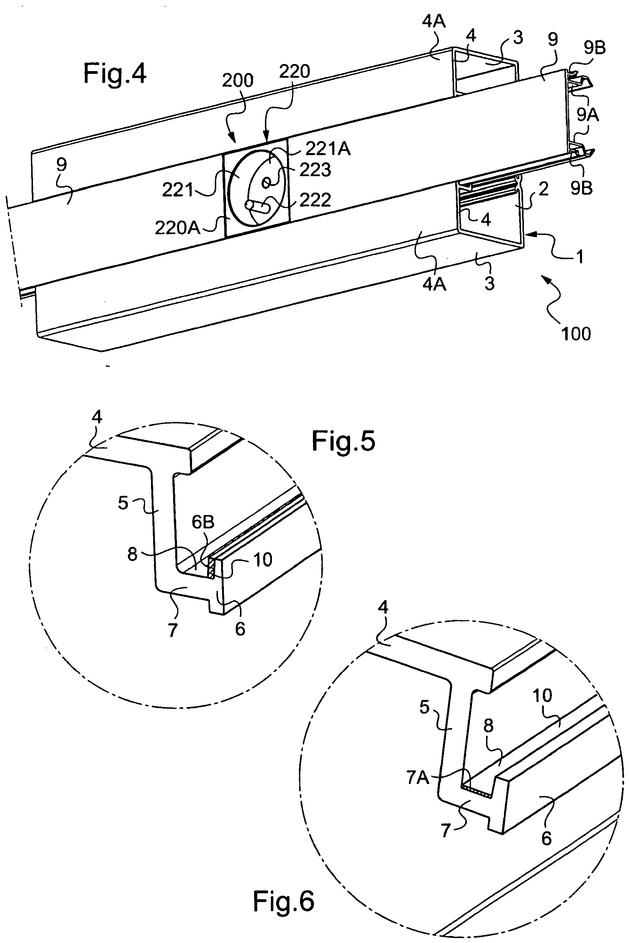

Sur les figures 1 et 4 on a représenté une goulotte électrique 100 qui comporte un profilé, appelé socle 1, avec un fond 2 et deux ailes latérales longitudinales 3 entre lesquelles sont définis une ouverture longitudinale 1A ainsi qu'un espace de réception de divers câbles et appareillages électriques.

Ici, le socle 1 présente une section en U et ses deux ailes latérales longitudinales 3 sont parallèles mais, en variante, il peut présenter une section d'une toute autre forme et en particulier une section en V avec deux ailes latérales qui divergent l'une par rapport à l'autre à partir du fond.

L'ouverture longitudinale 1A est fermée par des tronçons de couvercle 9 qui comprennent des pattes 9A, 9B de montage sur des aménagements du socle 1 (voir figure 4).

Les deux ailes latérales longitudinales 3 du socle 1 comprennent des retours 4, dirigés l'un vers l'autre, qui s'étendent sensiblement dans le même plan que les tronçons de couvercle 9.

L'ouverture longitudinale 1A du socle 1 est bordée par deux parois longitudinales rentrantes 5, parallèles entre elles et aussi parallèles aux deux parois latérales longitudinales 3 du socle 1. Chaque paroi rentrante 5 est rattachée à la face arrière 4B d'un retour 4, à proximité d'un bord libre du retour 4, en étant perpendiculaire à celui-ci. Chaque paroi rentrante 5 s'étend donc à l'intérieur du socle 1 sous le retour 4 correspondant, parallèlement aux deux parois latérales longitudinales 3 du socle 1.

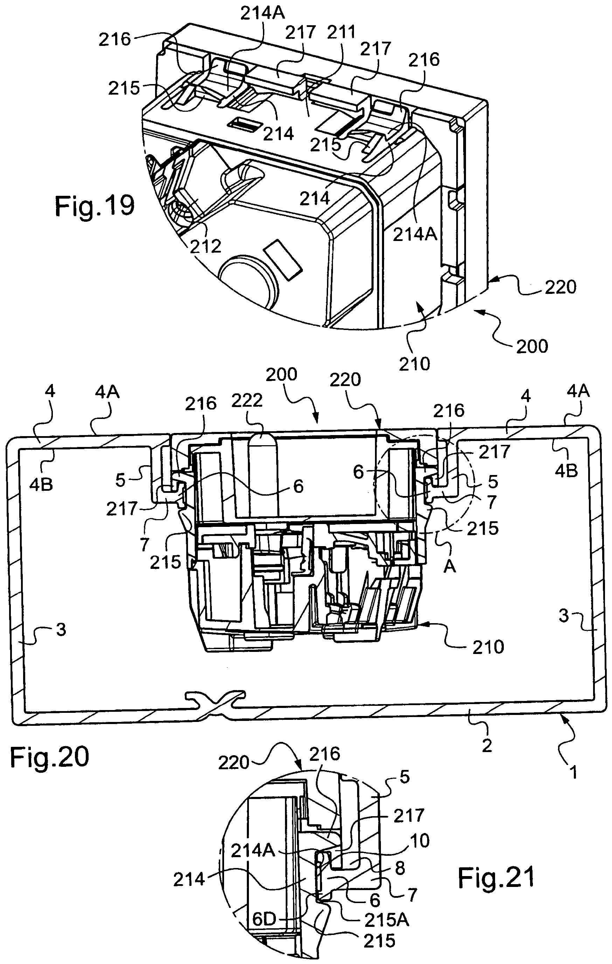

L'ouverture longitudinale 1A définie ci-dessus est munie de deux bandes de clipsage aptes à permettre le montage des tronçons de couvercle 9 ainsi que le montage d'un appareillage électrique 200 du type de celui représenté sur les figures 19 à 26.

Plus précisément, comme le montrent les figures 1 à 18, chaque bande de clipsage comporte ici une aile longitudinale 6 rattachée par une entretoise 7 à l'extrémité intérieure libre de la paroi rentrante 5 correspondante.

Chaque aile longitudinale 6 et chaque entretoise 7 associée sont situées à l'intérieur du socle 1 à distance de la face arrière 4B du retour 4 correspondant du socle 1.

Chaque entretoise 7 définit avec l'aile longitudinale 6 et la paroi rentrante 5 correspondante, une gorge longitudinale 8 ouverte vers l'avant du socle 1.

Selon les exemples représentés sur les différentes figures, chaque aile longitudinale 6 comporte un talon 6D qui s'étend vers le fond 2 du socle 1 sous chaque gorge longitudinale 8. Chaque talon 6D forme un rebord d'accrochage pour des moyens d'encliquetage prévus sur chaque tronçon de couvercle 9 ou sur l'appareillage électrique 200.

Toutefois, selon une variante non représentée, on peut prévoir que chaque aile longitudinale 6 ne comporte pas de talon et s'arrête au ras de la face arrière de l'entretoise 7 correspondante. La face arrière de chaque entretoise forme alors une face d'accrochage pour des moyens d'encliquetage prévus sur chaque tronçon de couvercle 9 ou sur l'appareillage électrique 200.

Chaque tronçon de couvercle 9 porte perpendiculairement sur sa face arrière, en parallèle, le long de chacun de ses deux bords longitudinaux, d'une part, une rangée de pattes d'engagement 9B destinées à s'engager dans la gorge longitudinale 8 correspondante du socle 1, et, d'autre part, une rangée de pattes d'encliquetage 9A destinées à s'accrocher sous ladite gorge longitudinale 8. Dans le cas particulier représenté, les pattes d'encliquetage 9A du tronçon de couvercle 9 s'accrochent au talon 6D de l'aile longitudinale 6 de la bande de clipsage correspondante du socle 1.

Lorsque chaque tronçon de couvercle 9 est monté sur le socle 1, sa face avant s'étend à effleurement de la face avant 4A des retours 4 du socle 1.

L'appareillage électrique 200 représenté sur les figures 1, 19 à 21, est ici une prise de courant. Il est dit « à clipsage direct » sur le socle 1, dans la mesure où il vient s'encastrer, sans mise en oeuvre d'un moyen de fixation particulier, dans l'ouverture longitudinale 1A du socle 1 à l'emplacement choisi par l'installateur. Comme le montrent plus particulièrement les figures 1, 4 et 20, l'enjoliveur 220 de l'appareillage électrique 200 vient fermer localement ladite ouverture longitudinale 1A du socle 1 en s'étendant en largeur d'un bord longitudinal à l'autre de celle-ci, sensiblement dans le même plan que les tronçons de couvercle 9. Ainsi, la face avant 220A de l'enjoliveur 220 s'étend à effleurement de la face avant 4A des retours 4 du socle 1.

Cet appareillage électrique 200 comprend un socle 210 et un enjoliveur 220 monté sur le socle 210. Un bornier 212 est prévu sur un côté du socle 210 pour l'alimentation électrique du mécanisme d'appareillage par des conducteurs électriques provenant du réseau électrique et courant dans le fond du socle 1.

L'enjoliveur 220 définit un puits d'insertion d'une fiche électrique (non représentée). Ce puits d'insertion est délimité par une paroi cylindrique 221 et une paroi de fond 221A percée de deux trous 223 donnant accès aux alvéoles des bornes électriques de phase et de neutre du mécanisme d'appareillage. La paroi de fond 221A de ce puits est également percée d'un troisième trou au travers duquel émerge dans ledit puits une broche de terre 222 reliée électriquement à la borne de terre du mécanisme d'appareillage.

Avantageusement, le socle 210 de l'appareillage électrique 200 comporte sur deux faces latérales 211 opposées des pattes flexibles 214 qui portent en saillie, d'une part, des dents d'encliquetage 215 dont les faces d'accrochage 215A sont destinées à s'accrocher sous les gorges longitudinales 8 du socle 1, et, d'autre part, des languettes 216 destinées à prendre appui sur le bord libre avant 6C des ailes longitudinales 6 des bandes de clipsage dudit socle 1. Dans le cas particulier représenté, les faces d'accrochage 215A des dents d'encliquetage 215 du socle 210 de la prise de courant s'accrochent au talon 6D de l'aile longitudinale 6 de la bande de clipsage correspondante du socle 1.

Une fois que le socle 210 de l'appareillage électrique 200 est encliqueté sur les bandes de clipsage du socle 1 au moyen de ses dents d'encliquetage 215, les languettes 216, qui prennent appui sur le bord libre avant 6C des ailes longitudinales 6 des bandes de clipsage du socle, évitent lors d'un choc que l'appareillage électrique 200 s'enfonce dans le fond dudit socle. Ces languettes 216 forment alors des moyens anti-enfoncement de l'appareillage électrique 200.

La flexibilité naturelle du socle 1 peut conduire, en cas de contrainte, à un écartement local des deux parois latérales longitudinale 3 du socle 1, c'est-à-dire à un élargissement local de l'ouverture longitudinale 1A, préjudiciable à la bonne tenue de l'appareillage électrique 200 sur le socle 1.

C'est pour cela que, avantageusement, l'appareillage électrique 200 tel que représenté sur les figures 19 à 21 comporte des moyens d'accrochage 217, distincts des dents d'encliquetage 215 et des languettes 216 d'appui, conformés le long de deux côtés transversaux parallèles de l'appareillage électrique et agencés pour coopérer avec les bandes de clipsage parallèles dudit socle 1 afin de stabiliser localement la largeur de ladite ouverture longitudinale 1A du socle.

Ici, ces moyens d'accrochage 217 appartiennent au socle 210 de la prise de courant 200. En variante, on peut prévoir que ces moyens d'accrochage appartiennent à une autre partie de l'appareillage électrique comme à l'enjoliveur par exemple.

Plus particulièrement, les moyens d'accrochage comprennent un couple de nervures 217 placé sur chacune des faces latérales 211 opposées du socle 210 de la prise de courant 200, entre deux dents d'encliquetage 215 . Chaque nervure 217 présente la forme d'un crochet et est adaptée à s'engager derrière l'aile longitudinale 6 de la bande de clipsage correspondante du socle 1 dans la gorge longitudinale 8 formée à l'extrémité du retour 4 de l'aile latérale longitudinale 3 du socle 1 (voir figures 20 et 21).

Selon une caractéristique particulièrement avantageuse de la goulotte électrique 100, son socle 1 comprend des moyens de freinage de l'appareillage électrique 200 ou d'un accessoire quelconque selon l'axe longitudinal du socle 1.

Ces moyens de freinage comprennent un tampon 10 ; 10' en matière élastique à fort coefficient de frottement prévu sur une partie intérieure du socle 1.

Selon l'exemple représenté sur les figures 1 et 2, chaque tampon 10 en matière élastique est placé sur la face externe 6A de l'aile longitudinale 6 de chaque bande de clipsage du socle 1.

Chaque tampon 10 se présente sous la forme d'une bande prévue sur la longueur de la bande de clipsage correspondante du socle 1. Ici, chaque bande est continue sur la longueur de la bande de clipsage. Préférentiellement, la hauteur de la bande est inférieure à environ 4,5 mm ce qui correspond à la hauteur préférentielle de l'aile longitudinale 6 de chaque bande de clipsage.

Toutefois, selon une variante non représentée, on pourra prévoir que chaque bande en matière élastique à fort coefficient de frottement est discontinue sur la longueur de la bande de clipsage.

La matière élastique de chaque tampon 10 est par exemple un élastomère tel qu'un polyuréthane ou un caoutchouc mousse, ou encore une résine plastique telle qu'une résine de chlorure de polyvinyle dont la dureté est comprise entre 30 shore A et 100 shore A, préférentiellement égale à 65 shore A.

Chaque tampon 10 est avantageusement co-extrudé avec le socle 1 mais il peut être également rapporté par collage ou par soudage sur celui-ci ou encore il peut être lié au socle par une liaison mécanique telle qu'une liaison par emboîtement ou par encliquetage.

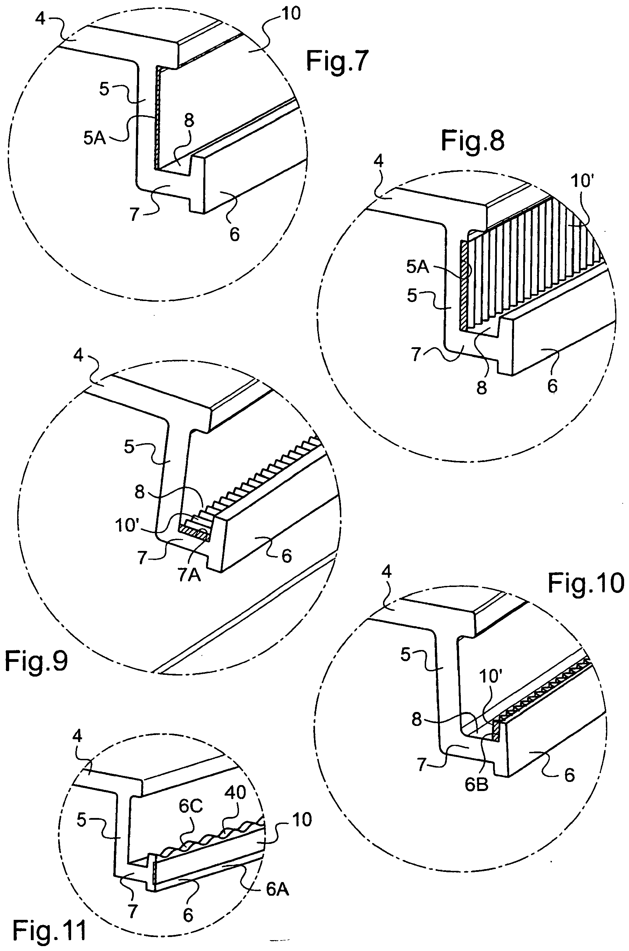

Selon d'autres modes de réalisation du socle 1 de la goulotte représentés plus particulièrement sur les figures 5 à 10, chaque tampon 10 ; 10' en matière élastique à fort coefficient de frottement peut être placé à d'autres endroits du socle 1, comme, par exemple, sur la face interne 6B de l'aile longitudinale 6 de ladite bande de clipsage (voir figures 5 et 10) ou sur une face de l'entretoise 7 de ladite bande de clipsage, au fond 7A de la gorge longitudinale 8 (voir figures 6 et 9) ou encore sur la face interne 5A de la paroi longitudinale rentrante 5 du socle 1 (voir figures 7 et 8).

Selon d'autres variantes non représentées du socle de la goulotte, chaque tampon en matière élastique à fort coefficient de frottement peut être placé sur la tranche supérieure 6C ou la tranche inférieure 6E de l'aile longitudinale 6 de la bande de clipsage correspondante du socle.

Comme le montrent plus particulièrement les figures 8 à 10, on peut prévoir que chaque tampon 10' comporte une surface d'accroche avec des reliefs comme une surface striée, grainée, moletée, crantée ou autre de façon à augmenter le pouvoir de freinage du tampon.

Comme le montre plus particulièrement la figure 21, lorsque la prise de courant 200 représentée sur la figure 19 est encliquetée sur les bandes de clipsage du socle 1 de la goulotte 100, une partie lisse 214A de la face externe des pattes du socle 210 qui portent les dents d'encliquetage 215, est plaquée contre le tampon 10 en matière élastique à fort coefficient de frottement prévu sur la face externe 6A de l'aile longitudinale 6 de la bande de clipsage correspondante du socle 1. L'adhérence produite entre la matière élastique du tampon 10 et les parties lisses 214A des faces externes des pattes 214 du socle 210 de la prise de courant 200 suffit à immobiliser ou à freiner l'appareillage électrique 200 suivant la direction longitudinale du socle 1 de la goulotte électrique 100.

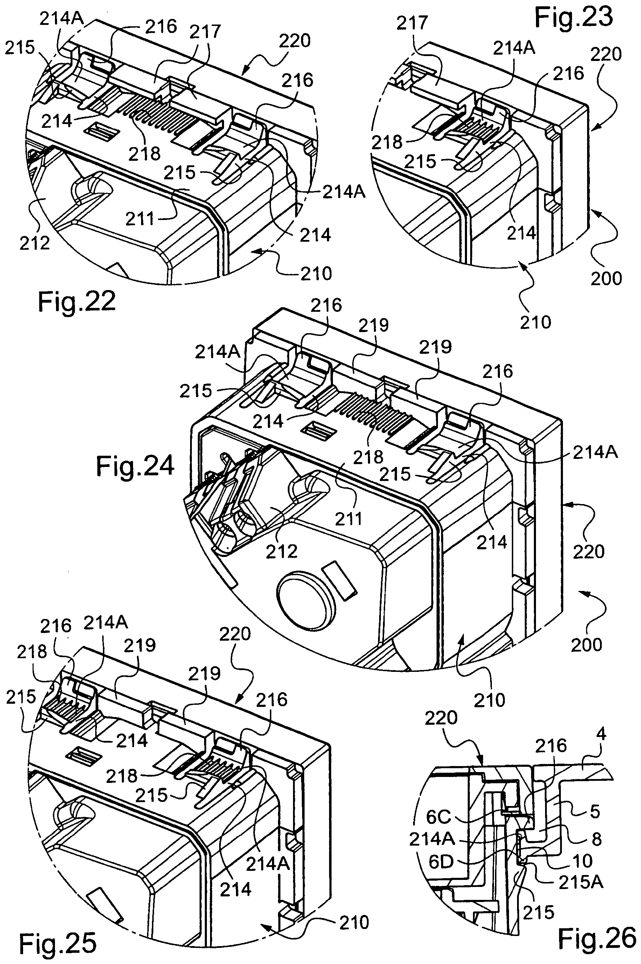

Sur les figures 22 à 26, on a représenté des variantes de réalisation de l'appareillage électrique 200 spécialement adaptées à être montées sur le socle 1 de la goulotte électrique 100 représenté sur les figures 1 et 2.

Selon ces variantes dédiées au socle 1, l'appareillage électrique 200 comporte des moyens de freinage 218 adaptés à coopérer avec chaque tampon 10 en matière élastique à fort coefficient de frottement du socle 1 de la goulotte électrique 100.

Ici, préférentiellement, lesdits moyens de freinage 218 de l'appareillage électrique 200 sont prévus sur chaque face latérale 211 du socle 210 de la prise de courant qui portent les moyens d'encliquetage 215, 216 et d'accrochage 217 au socle 1 de la goulotte électrique 100.

Ces moyens de freinage 218 comprennent au moins un élément rigide adapté à s'enfoncer dans un des tampons 10, 10' en matière élastique à fort coefficient de frottement prévu sur le socle 1.

Cet élément rigide peut prendre la forme d'un simple plot en saillie placé à l'endroit adéquat sur la face latérale correspondante du socle 210 de l'appareillage électrique.

Selon les exemples préférentiels représentés, l'élément rigide comprend au moins une série de stries 218 prévues en saillie sur la face latérale 211 du socle 210 de l'appareillage électrique 200.

Les stries 218 peuvent être prévues sur une partie 214A (prévue entre la dent d'encliquetage 215 et la languette 216) de la face externe de chaque patte 214 d'encliquetage du socle 210 de la prise de courant 210 (voir figures 23 et 25), ou elles peuvent être prévues sur la face latérale 211 du socle 210 derrière les nervures 217 d'accrochage ou sous les languettes 219 d'appui (voir figures 22 et 24).

Dans les deux cas, lorsque l'appareillage électrique 200 est encliqueté sur les bandes de clipsage du socle 1 de la goulotte électrique 100, ses stries 218 s'enfoncent dans la bande 10 ; 10' en matière élastique à fort coefficient de frottement, prévue sur la face externe 6A de l'aile longitudinale 6 de chaque bande de clipsage du socle 1 de manière à immobiliser ou à freiner l'appareillage électrique suivant l'axe longitudinal du socle 1.

Pour chacun des modes de réalisation du socle 1 de la goulotte, il est prévu une variante correspondante de l'appareillage électrique 200 qui comporte un élément rigide placé de manière adaptée sur son socle 210 ou sur son enjoliveur 220 de manière à s'enfoncer dans le tampon prévu sur le socle lorsque l'appareillage électrique est monté sur ce dernier.

Selon une autre variante de l'appareillage électrique 200, il peut être prévu qu'il comporte également au moins un tampon en matière élastique à fort coefficient de frottement adapté à prendre appui contre le tampon en matière élastique à fort coefficient de frottement prévu sur le socle 1.

L'appui de deux tampons en matière élastique à fort coefficient de frottement l'un contre l'autre permet d'obtenir également un freinage ou une immobilisation efficace de l'appareillage électrique sur le socle.

Le tampon en matière élastique peut être prévu sur le socle 210 de l'appareillage électrique 200 à la place de chaque élément rigide adapté à s'enfoncer dans chaque tampon du socle.

La matière élastique de chaque tampon de l'appareillage électrique 200 peut également être un élastomère tel qu'un polyuréthane ou un caoutchouc mousse ou encore une résine plastique telle qu'une résine de chlorure de polyvinyle dont la dureté est comprise entre 30 shore A et 100 shore A, préférentiellement égale à 65 shore A.

Par ailleurs, la différence entre les modes de réalisation de l'appareillage électrique 200 représentés sur les figures 22 et 23 d'une part, et les figures 24 et 25 d'autre part, réside dans le fait que pour les modes de réalisation des figures 22 et 23, le socle 210 de l'appareillage électrique 200 est équipé des nervures d'accrochage 217 anti-écartement alors que, pour les modes de réalisation des figures 24 et 25, le socle 210 de l'appareillage électrique 200 ne comporte pas de telles nervures mais il comporte de simples languettes 219 qui sont des languettes anti-enfoncement jouant le même rôle que celui des languettes 216 portées par les pattes 214.

Pour les modes de réalisation de l'appareillage électrique 200 des figures 24 à 26 qui ne comportent pas de nervures d'accrochage 217, avantageusement, on prévoit, un accessoire, appelé accessoire de renfort, mis en place dans l'ouverture longitudinale 1A du socle 1 de la goulotte électrique 100, au travers de celle-ci, à proximité de l'appareillage électrique 200, pour empêcher, au moins localement, l'écartement de ladite ouverture longitudinale 1A.

Pour obtenir ce résultat, il suffit d'un seul accessoire de renfort installé à côté de l'appareillage électrique 200 mais il est préférable d'en disposer deux de part et d'autre de celui-ci.

Classiquement, un tel accessoire de renfort comporte un support à accrocher aux bandes de clipsage du socle et un cache à monter sur le support pour en recouvrir la face avant. L'une des deux parties de l'accessoire comporte des moyens d'accrochage adaptés à venir s'accrocher derrière les ailes longitudinales des bandes de clipsage du socle de la goulotte électrique pour stabiliser localement la largeur de l'ouverture longitudinale du socle.

En outre, préférentiellement, le cache de l'accessoire de renfort peut comporter, en porte-à-faux, le long d'au moins un côté longitudinal, une avancée destinée à recouvrir un bord transversal d'une extrémité coupée d'un tronçon de couvercle rapporté dans l'ouverture longitudinale du socle à côté de l'appareillage électrique.

Dans ce cas, le support de l'accessoire de renfort comporte, en porte-à-faux, sur un côté longitudinal, en correspondance avec l'avancée du cache, une plate-forme adaptée à s'engager sous le bord transversal de l'extrémité coupée dudit tronçon de couvercle rapporté dans l'ouverture longitudinale du socle.

Ainsi, avantageusement, lorsque l'accessoire est placé en position d'utilisation sur le socle 1 de la goulotte électrique 100, à côté de l'appareillage électrique 200, non seulement il stabilise localement la largeur de l'ouverture longitudinale 1A du socle 1, grâce à ses moyens d'accrochage, mais il réalise une jonction étanche entre lui et le bord transversal de l'extrémité coupée du tronçon de couvercle rapporté de manière adjacente dans l'ouverture longitudinale 1A du socle 1, en prenant ledit bord transversal en sandwich entre l'avancée du cache et la plate-forme du support. La plate-forme du support forme avantageusement un appui pour l'extrémité coupée du tronçon de couvercle de façon à éviter que, lors d'un choc ou d'une pression, celui-ci ne s'enfonce dans le socle 1. En outre, la plate-forme constitue un obstacle qui empêche un usager d'introduire à l'intérieur du socle de goulotte 1A un objet fin, comme un fil métallique ou la pointe d'un outil métallique, glissé à force entre le tronçon de couvercle et l'avancée du cache.

Avantageusement, lorsque l'accessoire de renfort est monté sur le socle 1 de la goulotte électrique 100, il coopère avec les tampons 10, 10' en matière élastique prévu sur le socle 1 qui freinent ou même immobilisent l'accessoire suivant la direction longitudinale du socle.

Selon les modes de réalisation de la goulotte électrique 100 représentés sur les figures 3, 11 à 18, le socle 1 comporte intérieurement des moyens d'immobilisation 20 ; 30 ; 40 ; 50, distincts dudit tampon 10, conformés en saillie ou en creux le long de ladite ouverture longitudinale 1A et agencés pour coopérer avec des moyens complémentaires prévus sur un appareillage électrique ou sur un accessoire quelconque monté directement sur ledit socle par l'intermédiaire de moyens de clipsage coopérant avec lesdites bandes de clipsage du socle.

Selon le mode de réalisation de la figure 3, ces moyens d'immobilisation comprennent une série de crans 20 répartis sur la longueur du talon 6D de l'aile longitudinale 6 d'au moins une bande de clipsage du socle 1.

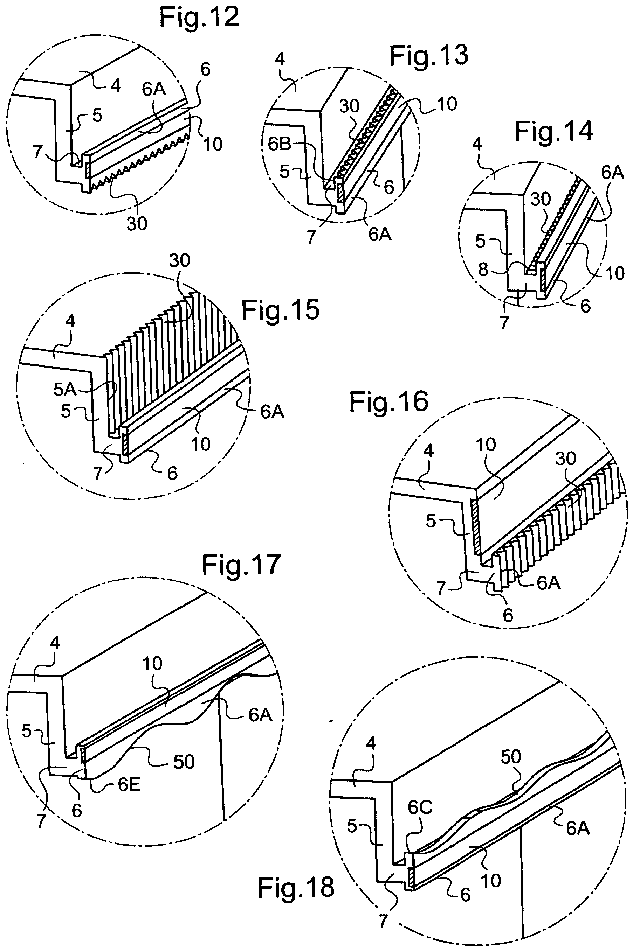

Selon les modes de réalisation des figures 12 à 16, lesdits moyens d'immobilisation comprennent au moins une série de stries 30 réparties sur l'aile longitudinale 6 ou sur l'entretoise 7 d'au moins une bande de clipsage du socle 1 ou sur la face interne d'une paroi rentrante 5 du socle 1.

Selon les modes de réalisation des figures 11, 17 et 18, lesdits moyens d'immobilisation comprennent des ondulations 40 ; 50 sur la tranche supérieure ou inférieure de l'aile longitudinale 6 d'au moins une bande de clipsage du socle 1.

Ces moyens d'immobilisation se cumulent aux moyens de freinage constitués par lesdits tampons 10 ;10' pour immobiliser un appareillage électrique ou un accessoire rapporté sur le socle 1.

Bien entendu dans ce cas, l'appareillage électrique ou l'accessoire dédié peut comporter en correspondance des crans, des stries ou des ondulations du socle, les plots, les stries ou les ondulations adaptés à coopérer avec ceux-ci.

Enfin, selon une caractéristique avantageuse de la goulotte selon l'invention, le tampon 10 ; 10' en matière élastique à fort coefficient de frottement prévu sur le socle 1 présente une couleur spécifique différente de la couleur du socle lui-même. Lorsque le tampon 10, 10' se présente en bande, c'est la bande en matière élastique qui est de la couleur spécifique choisie telle que rouge, vert, bleue, jaune, noire ou autre. Cette bande de couleur distinctive sert avantageusement de moyen de repère à l'utilisateur qui peut associer à une goulotte d'un code couleur spécifique une gamme d'appareillages électriques ou d'accessoires du même code couleur spécialement dédiés à cette goulotte.

En outre, le socle 1 de la goulotte selon l'invention peut comporter deux tampons 10 de couleurs différentes, placés sur le socle 1 pour notamment avantageusement identifier un sens de pose du socle 1 sur la paroi de réception afin de faciliter le travail de l'installateur.

## Revendications

1. Goulotte électrique comprenant un socle (1) pourvu, d'une part, de deux ailes latérales longitudinales (3) comportant des retours (4) dirigés l'un vers l'autre, qui délimitent une ouverture longitudinale (1A) destinée à recevoir un accessoire ou un appareillage électrique à accrocher au socle, et, d'autre part, d'une partie intérieure rigide qui comprend, d'une part, une paroi longitudinale rentrante (5) rattachée à une face arrière (4B) d'un des retours (4) et s'étendant à l'intérieur du socle (1) parallèlement à une des ailes latérales longitudinales (3) du socle, et, d'autre part, une bande de clipsage adaptée à l'accrochage d'un accessoire ou d'un appareillage électrique, cette bande de clipsage comportant une aile longitudinale (6), située en dessous du plan de ladite ouverture longitudinale, rattachée par une entretoise (7) à ladite paroi longitudinale rentrante (5) du socle (1), **caractérisée en ce que** son socle comporte des moyens de freinage d'un appareillage électrique ou d'un accessoire quelconque selon l'axe longitudinal du socle (1), ces moyens de freinage comprenant au moins un tampon (10 ; 10') en matière élastique à fort coefficient de frottement co-extrudé avec ladite partie intérieure rigide du socle (1) ou rapporté par collage ou par soudage sur celle-ci ou encore lié à ladite partie intérieure rigide du socle (1) par une liaison mécanique telle qu'une liaison par emboîtement ou par encliquetage.

2. Goulotte électrique selon la revendication précédente, dans laquelle chaque tampon (10) se présente sous la forme d'une bande qui s'étend le long de ladite bande de clipsage.

3. Goulotte électrique selon la revendication précédente, dans laquelle chaque bande est continue sur la longueur de la bande de clipsage.

4. Goulotte électrique selon la revendication 2, dans laquelle chaque bande est discontinue sur la longueur de la bande de clipsage.

5. Goulotte électrique selon l'une des revendications 2 à 4, dans laquelle chaque bande présente une hauteur inférieure ou égale à 4,5 mm.

6. Goulotte électrique selon l'une des revendications précédentes, dans laquelle la matière élastique de chaque tampon (10) est un élastomère tel qu'un polyuréthane ou un caoutchouc mousse.

7. Goulotte électrique selon l'une des revendications 1 à 5, dans laquelle la matière élastique de chaque tampon (10) est une résine plastique telle qu'une résine de chlorure de polyvinyle dont la dureté est comprise entre 30 shore A et 100 shore A, préférentiellement égale à 65 shore A.

8. Goulotte électrique selon l'une des revendications précédentes, dans laquelle chaque tampon (10') comporte une surface d'accroche avec des reliefs.

9. Goulotte électrique selon l'une des revendications précédentes, dans laquelle le tampon (10) est placé sur une face (6A, 6B) de l'aile longitudinale (6) de ladite bande de clipsage.

10. Goulotte électrique selon l'une des revendications précédentes, dans laquelle le tampon est placé sur la tranche supérieure (6C) de l'aile longitudinale (6) de ladite bande de clipsage.

11. Goulotte électrique selon l'une des revendications précédentes, dans laquelle le tampon (10) est placé sur la tranche inférieure (6E) de l'aile longitudinale (6) de ladite bande de clipsage.

12. Goulotte électrique selon l'une des revendications précédentes, dans laquelle le tampon (10) est placé sur une face (7A) de l'entretoise (7) de ladite bande de clipsage.

13. Goulotte électrique selon l'une des revendications précédentes, dans laquelle le tampon (10) est placé sur une face interne (5A) de la paroi longitudinale rentrante (5) du socle (1).

14. Goulotte électrique selon l'une des revendications précédentes, dans laquelle chaque tampon présente une couleur différente de celle du socle.

15. Goulotte électrique selon l'une quelconque des revendications précédentes, dans laquelle le socle (1) comporte intérieurement des moyens d'immobilisation, distincts dudit tampon, conformés en saillie ou en creux le long de ladite ouverture longitudinale (1A) et agencés pour coopérer avec des moyens complémentaires prévus sur un appareillage électrique ou sur un accessoire monté directement sur ledit socle par l'intermédiaire de moyens de clipsage coopérant avec lesdites bandes de clipsage du socle.

16. Goulotte électrique selon la revendication précédente, dans laquelle lesdits moyens d'immobilisation comprennent une série de crans (20) répartis sur la longueur de l'aile longitudinale (6) d'au moins une bande de clipsage du socle (1).

17. Goulotte électrique selon la revendication 15, dans laquelle lesdits moyens d'immobilisation comprennent au moins une série de stries (30) réparties sur l'aile longitudinale d'au moins une bande de clipsage du socle.

18. Goulotte électrique selon la revendication 15, dans laquelle lesdits moyens d'immobilisation comprennent des ondulations (40 ;50) sur l'aile longitudinale (6) d'au moins une bande de clipsage du socle (1).

19. Ensemble électrique qui comprend une goulotte électrique selon l'une quelconque des revendications précédentes et un appareillage électrique (200) comportant des moyens de freinage adaptés à coopérer avec un tampon (10, 10') à fort coefficient de frottement du socle (1) de la goulotte électrique.

20. Ensemble électrique selon la revendication précédente, dans lequel l'appareillage électrique (200) comporte un socle (210) présentant au moins une face latérale (211) pourvue desdits moyens de freinage (218).

21. Ensemble électrique selon la revendication 19, dans lequel l'appareillage électrique comporte un enjoliveur présentant au moins une face latérale pourvue desdits moyens de freinage.

22. Ensemble électrique selon l'une des revendications 19 à 21, dans lequel lesdits moyens de freinage de l'appareillage électrique (200) comprennent au moins un élément rigide adapté à s'enfoncer dans un des tampons (10, 10') en matière élastique à fort coefficient de frottement prévu sur le socle (1).

23. Ensemble électrique selon la revendication précédente, dans lequel ledit élément rigide prend la forme d'un simple plot en saillie placé à l'endroit adéquat sur une face latérale de l'appareillage électrique.

24. Ensemble électrique selon l'une des revendications 19 à 21, dans lequel lesdits moyens de freinage comprennent au moins une série de stries prévues en saillie sur une face latérale de l'appareillage électrique.

25. Ensemble électrique selon l'une des six revendications précédentes, dans lequel l'appareillage électrique comporte de manière distincte des moyens d'encliquetage et des moyens d'accrochage (217) conformés le long de deux côtés transversaux parallèles de l'appareillage électrique et agencés pour coopérer avec les bandes de clipsage parallèles du socle (1) de la goulotte électrique afin de stabiliser localement la largeur de l'ouverture longitudinale dudit socle (1).

26. Ensemble électrique selon la revendication précédente, dans lequel lesdits moyens d'accrochage comprennent sur chacun desdits côtés transversaux parallèles, au moins une nervure (217) adaptée à s'engager derrière une aile longitudinale (6) de la bande de clipsage correspondante du socle (1) dans une gorge longitudinale (8) formée à l'extrémité d'un retour (4) d'une aile latérale longitudinale du socle (1).

## Patentansprüche

1. Elektrischer Kabelkanal mit einem Sockel (1), der einerseits mit zwei sich längs erstreckenden, aufeinander zu gerichtete Abwinklungen (4) aufweisenden seitlichen Wandungen (3) versehen ist, die eine sich längs erstreckende Öffnung (1A) begrenzen, die dazu bestimmt ist, ein Zubehörteil oder ein am Sockel anzubringendes elektrisches Gerät aufzunehmen, und andererseits mit einem steifen inneren Teil versehen ist, der einerseits eine sich längs erstreckende und nach innen weisende Wandung (5), die mit einer Rückseite (4B) einer der Abwinklungen (4) verbunden ist und sich im Inneren des Sockels (1) parallel zu einer der sich längs erstreckenden seitlichen Wandungen (3) des Sockels erstreckt, und andererseits ein Klemmband, das zum Anbringen eines Zubehörteils oder eines elektrischen Geräts ausgelegt ist, aufweist, wobei das Klemmband einen sich längs erstreckenden Schenkel (6) aufweist, der unterhalb der Ebene der sich längs erstreckenden Öffnung gelegen ist und durch einen Steg (7) mit der sich längs erstreckenden, nach innen weisenden Wandung (5) des Sockels (1) verbunden ist, **dadurch gekennzeichnet, daß** dessen Sockel Mittel zum Abbremsen eines elektrischen Geräts oder eines beliebigen Zubehörteils entlang der Längsachse des Sockels (1) aufweist, wobei die Bremsmittel wenigstens einen Puffer (10; 10') aus elastischem Material mit großem Reibungskoeffizienten aufweisen, der mit dem steifen inneren Teil des Sockels (1) zusammen extrudiert ist oder durch Klebung oder Schweißung auf selbigen aufgebracht ist oder durch eine mechanische Verbindung wie zum Beispiel Einsetzen oder Einklemmen mit dem steifen inneren Teil des Sockels (1) verbunden ist.

2. Elektrischer Kabelkanal gemäß dem vorangehenden Anspruch, bei dem jeder Puffer (10) in Form eines Bandes vorliegt, das sich entlang des Klemmbandes erstreckt.

3. Elektrischer Kabelkanal gemäß dem vorangehenden Anspruch, bei dem jedes Band über die Länge des Klemmbandes durchgehend ist.

4. Elektrischer Kabelkanal gemäß Anspruch 2, bei dem jedes Band nicht über die Länge des Klemmbandes durchgehend ist.

5. Elektrischer Kabelkanal gemäß einem der Ansprüche 2 bis 4, bei dem jedes Band eine Höhe von weniger als oder gleich 4,5 mm aufweist.

6. Elektrischer Kabelkanal gemäß einem der vorangehenden Ansprüche, bei dem das elastische Material jedes Puffers (10) ein Elastomer wie etwa ein Polyurethan- oder Kautschukschaum ist.

7. Elektrischer Kabelkanal gemäß einem der Ansprüche 1 bis 5, bei dem das elastische Material jedes Puffers (10) ein Kunstharz wie etwa ein Polyvinylchloridharz ist, dessen Härte zwischen 30 Shore A und 100 Shore A, vorzugsweise gleich 65 Shore A, beträgt.

8. Elektrischer Kabelkanal gemäß einem der vorangehenden Ansprüche, bei dem jeder Puffer (10') eine Haftfläche mit Profilen aufweist.

9. Elektrischer Kabelkanal gemäß einem der vorangehenden Ansprüche, bei dem der Puffer (10) auf einer Seite (6A, 6B) des sich längs erstreckenden Schenkels (6) des Klemmbandes angeordnet ist.

10. Elektrischer Kabelkanal gemäß einem der vorangehenden Ansprüche, bei dem der Puffer (10) auf der oberen Stirnseite (6C) des sich längs erstreckenden Schenkels (6) des Klemmbandes angeordnet ist.

11. Elektrischer Kabelkanal gemäß einem der vorangehenden Ansprüche, bei dem der Puffer (10) auf der unteren Stirnseite (6E) des sich längs erstreckenden Schenkels (6) des Klemmbandes angeordnet ist.

12. Elektrischer Kabelkanal gemäß einem der vorangehenden Ansprüche, bei dem der Puffer (10) auf einer Seite (7A) des Stegs (7) des Klemmbandes angeordnet ist.

13. Elektrischer Kabelkanal gemäß einem der vorangehenden Ansprüche, bei dem der Puffer (10) auf einer Innenseite (5A) der sich längs erstreckenden, nach innen weisenden Wandung (5) des Sockels (1) angeordnet ist.

14. Elektrischer Kabelkanal gemäß einem der vorangehenden Ansprüche, bei dem jeder Puffer eine von der des Sockels verschieden Farbe hat.

15. Elektrischer Kabelkanal gemäß einem der vorangehenden Ansprüche, bei dem der Sockel (1) innen andere Festlegungsmittel als den Puffer aufweist, die entlang der sich längs erstreckenden Öffnung (1A) hervorstehend oder hohl ausgebildet sind und dazu ausgelegt sind, mit komplementären Mitteln zusammenzuwirken, die an einem elektrischen Gerät oder einem Zubehörteil vorgesehen sind, das mittels Klemmmitteln, die mit den Klemmbändern des Sockels zusammenwirken, direkt am Sockel angebracht ist.

16. Elektrischer Kabelkanal gemäß dem vorangehenden Anspruch, bei dem die Festlegungsmittel eine Reihe von über die Länge des sich längs erstreckenden Schenkels (6) wenigstens eines Klemmbandes des Sockels (1) verteilten Einkerbungen (20) aufweisen.

17. Elektrischer Kabelkanal gemäß Anspruch 15, bei dem die Festlegungsmittel wenigstens eine Reihe von über den sich längs erstreckenden Schenkel wenigstens eines Klemmbandes des Sockels verteilten Riefen (30) aufweisen.

18. Elektrischer Kabelkanal gemäß Anspruch 15, bei dem die Festlegungsmittel auf dem sich längs erstreckenden Schenkel (6) wenigstens eines Klemmbandes des Sockels (1) Wellungen (40; 50) aufweisen.

19. Elektroeinheit, die einen elektrischen Kabelkanal gemäß einem der vorangehenden Ansprüche und ein elektrisches Gerät (200) mit Bremsmitteln, die dazu ausgelegt sind, mit einem Puffer (10, 10') mit großem Reibungskoeffizienten des Sockels (1) des elektrischen Kabelkanals zusammenzuwirken, aufweist.

20. Elektroeinheit gemäß dem vorangehenden Anspruch, bei dem das elektrische Gerät (200) einen Sockel (210) aufweist, der wenigstens eine mit den Bremsmitteln (218) versehene seitliche Seite (211) hat.

21. Elektroeinheit gemäß Anspruch 19, bei dem das elektrische Gerät eine Zierkappe aufweist, die wenigstens eine mit den Bremsmitteln versehene seitliche Seite hat.

22. Elektroeinheit gemäß einem der vorangehenden Ansprüche, bei dem die Bremsmittel des elektrischen Geräts (200) wenigstens ein steifes Element aufweisen, das dazu ausgelegt ist, in einen der auf dem Sockel (1) vorgesehenen Puffer (10, 10') aus elastischem Material mit großem Reibungskoeffizienten einzudringen.

23. Elektroeinheit gemäß dem vorangehenden Anspruch, bei dem das steife Element die Form eines einfachen, hervorstehenden Stifts aufweist, der an geeigneter Stelle auf einer seitlichen Seite des elektrischen Geräts angeordnet ist.

24. Elektroeinheit gemäß einem der Ansprüche 19 bis 21, bei dem die Bremsmittel wenigstens eine Reihe Riefen aufweist, die auf einer seitlichen Seite des elektrischen Geräts hervorstehend vorgesehen sind.

25. Elektroeinheit gemäß einem der sechs vorangehenden Ansprüche, bei dem das elektrische Gerät einzeln ausgebildet Klemmmittel und Festlegungsmittel (217) aufweist, die entlang beider paralleler Querseiten des elektrischen Geräts ausgebildet sind und zum Zusammenwirken mit den parallelen Klemmbändern des Sockels (1) des elektrischen Kabelkanals ausgelegt sind, um die Breite der sich längs erstreckenden Öffnung des Sockels (1) örtlich zu stabilisieren.

26. Elektroeinheit gemäß dem vorangehenden Anspruch, bei dem die Festlegungsmittel auf jeder der beiden parallelen Querseiten wenigstens eine Rippe (217) aufweisen, die dazu ausgelegt ist, hinter einem sich längs erstreckenden Schenkel (6) des entsprechenden Klemmbandes des Sockels (1) in eine sich längs erstreckende Rinne (8) einzugreifen, die am Ende einer Abwinklung (4) eines sich längs erstreckenden seitlichen Schenkels des Sockels (1) ausgebildet ist.

## Claims

1. Electrical trunking comprising a base (1) that is provided firstly with two longitudinal side flanges (3) including rims (4) directed towards each other, that define a longitudinal opening (1A) for receiving an accessory or electrical equipment for catching onto the base, and secondly with a rigid inner portion that comprises firstly an inwardly-directed longitudinal wall (5) that is attached to a rear face (4B) of one of the rims (4) and that extends inside the base (1), parallel to one of the longitudinal side flanges (3) of the base, and secondly a clipping strip that is adapted for catching an accessory or electrical equipment, the clipping strip comprising a longitudinal flange (6) that is situated below the plane of said longitudinal opening, and that is attached by a spacer (7) to said inwardly-directed longitudinal wall (5) of the base (1), the electrical trunking being **characterized in that** its base includes brake means for braking any electrical equipment or accessory along the longitudinal axis of the base (1), the brake means comprising at least one pad (10; 10') made of elastic material having a high coefficient of friction that is co-extruded with said rigid inner portion of the base (1), or that is fitted thereto by adhesive-bonding or by heat-sealing, or that is connected to said rigid inner portion of the base (1) by a mechanical connection such as a connection by engagement or by snap-fastening.

2. Electrical trunking according to the preceding claim, wherein each pad (10) is in the form of a strip that extends along said clipping strip.

3. Electrical trunking according to the preceding claim, wherein each strip is continuous along the length of the clipping strip.

4. Electrical trunking according to claim 2, wherein each strip is discontinuous along the length of the clipping strip.

5. Electrical trunking according to any one of claims 2 to 4, wherein each strip presents a height that is less than or equal to 4.5 mm.

6. Electrical trunking according to any preceding claim, wherein the elastic material of each pad (10) is an elastomer such as a polyurethane or a foam rubber.

7. Electrical trunking according to any one of claims 1 to 5, wherein the elastic material of each pad (10) is a plastics resin such as a polyvinylchloride resin having hardness on the Shore A scale lying in the range 30 to 100, preferably equal to 65.

8. Electrical trunking according to any preceding claim, wherein each pad (10') includes a catch surface with portions in relief.

9. Electrical trunking according to any preceding claim, wherein the pad (10) is positioned on a face (6A, 6B) of the longitudinal flange (6) of said clipping strip.

10. Electrical trunking according to any preceding claim, wherein the pad is positioned on the top edge (6C) of the longitudinal flange (6) of said clipping strip.

11. Electrical trunking according to any preceding claim, wherein the pad (10) is positioned on the bottom edge (6E) of the longitudinal flange (6) of said clipping strip.

12. Electrical trunking according to any preceding claim, wherein the pad (10) is positioned on a face (7A) of the spacer (7) of said clipping strip.

13. Electrical trunking according to any preceding claim, wherein the pad (10) is positioned on an inner face (5A) of the inwardly-directed longitudinal wall (5) of the base (1).

14. Electrical trunking according to any preceding claim, wherein each pad presents a color that is different from the color of the base.

15. Electrical trunking according to any preceding claim, wherein the inside of the base (1) includes immobilization means, distinct from said pad, that extend along said longitudinal opening (1A) in projecting or in recessed form, and that are arranged to co-operate with complementary means provided on electrical equipment or on an accessory that is mounted directly on said base by means of clipping means that co-operate with said clipping strips of the base.

16. Electrical trunking according to the preceding claim, wherein said immobilization means comprise a series of notches (20) that are distributed along the length of the longitudinal flange (6) of at least one clipping strip of the base (1).

17. Electrical trunking according to claim 15, wherein said immobilization means comprise at least one series of notches (30) that are distributed along the longitudinal flange of at least one clipping strip of the base.

18. Electrical trunking according to claim 15, wherein said immobilization means comprise undulations (40; 50) along the longitudinal flange (6) of at least one clipping strip of the base (1).

19. An electrical assembly that comprises electrical trunking according to any preceding claim, and electrical equipment (200) including brake means that are adapted to co-operate with a pad (10, 10'), having a high coefficient of friction, of the base (1) of the electrical trunking.

20. An electrical assembly according to the preceding claim, wherein the electrical equipment (200) includes a base (210) that presents at least one side face (211) that is provided with said brake means (218).

21. An electrical assembly according to claim 19, wherein the electrical equipment includes a trim plate that presents at least one side face that is provided with said brake means.

22. An electrical assembly according to any one of preceding claims, wherein said brake means of the electrical equipment (200) comprise at least one rigid element that is adapted to be force-fitted into one of the pads (10, 10') made of elastic material having a high coefficient of friction provided on the base (1).

23. An electrical assembly according to the preceding claim, wherein said rigid element takes the form of a simple projecting lug that is positioned at the appropriate location on a side face of the electrical equipment.

24. An electrical assembly according to any one of claims 19 to 21, wherein said brake means comprise at least one series of notches that project from a side face of the electrical equipment.

25. An electrical assembly according to any one of the six preceding claims, wherein, in distinct manner, the electrical equipment includes snap-fastener means and catch means (217) that extend along two parallel transverse sides of the electrical equipment, and that are arranged to co-operate with the parallel clipping strips of the base (1) of the electrical trunking for locally stabilizing the width of the longitudinal opening of said base (1).

26. An electrical assembly according to the preceding claim, wherein, on each of said parallel transverse sides, said catch means comprise at least one rib (217) that is adapted to be engaged behind a longitudinal flange (6) of the corresponding clipping strip of the base (1), in a longitudinal groove (8) that is formed at the end of a rim (4) of a longitudinal side flange of the base (1).
